# EUROPÄISCHE PATENTSCHRIFT

(11) **EP 1 305 192 B1**
(45) Veröffentlichungstag und Bekanntmachung des Hinweises auf die Patenterteilung: **29.09.2004**
(21) Anmeldenummer: 01962567.2
(22) Anmeldetag: 18.07.2001
(51) Int. Cl.: B60R 21/02, B60J 5/04

(54) **FAHRERSCHUTZSYSTEM FÜR MOBILE ARBEITSMITTEL**
DRIVER PROTECTION SYSTEM FOR MOBILE OPERATING MEANS
SYSTEME DE PROTECTION DE CONDUCTEUR POUR ENGINS MOBILES

(30) Priorität: 26.07.2000 DE 10036253
(43) Veröffentlichungstag der Anmeldung: 02.05.2003
(73) Patentinhaber: IWS Ingenieurgesellschaft Weiner & Schröter MBH, 47475 Kamp-Lintfort (DE)
(72) Erfinder: WEINER, Uwe, 40219 Düsseldorf (DE); ELBRACHT, Dietrich, 22395 Hamburg (DE); PFEIFFER, Günter, 47906 Kempen (DE); DELLEN, Frank, 46049 Oberhausen (DE); BITZER, Monika, 47445 Moers (DE); SCHRÖTER, Oliver, 45475 Mülheim/Ruhr (DE)
(74) Vertreter: Viering, Jentschura & Partner
(86) Internationale Anmeldenummer: PCT/DE2001/002706
(87) Internationale Veröffentlichungsnummer: WO 2002/008024

(56) Entgegenhaltungen:
- EP-A- 0 992 382
- US-A- 4 392 660
- US-A- 4 431 234
- PATENT ABSTRACTS OF JAPAN vol. 012, no. 001 (M-656), 6. Januar 1988 (1988-01-06) -& JP 62 166139 A (TOYODA AUTOM LOOM WORKS LTD), 22. Juli 1987 (1987-07-22)
- PATENT ABSTRACTS OF JAPAN vol. 1998, no. 10, 31. August 1998 (1998-08-31) -& JP 10 129992 A (TOYOTA AUTOM LOOM WORKS LTD), 19. Mai 1998 (1998-05-19)

## Beschreibung

Die vorliegende Erfindung betrifft ein Fahrerschutzsystem für mobile Arbeitsmittel, insbesondere die Fahrerkabine eines Nutzfahrzeuges mit einem Fahrersitz gemäß dem Oberbegriff des Anspruches 1.

Im Stand der Technik sind einige Sicherheitssysteme zum Schutz des Fahrers bekannt. Insbesondere bei Fahrzeugen wie Gabelstaplern ist der Schutz des Fahrers vor Verletzungen, insbesondere infolge von last- und zentrifugalkraftbedingten Unfällen oder fahrbahnbedingtem Kippen notwendig.

Obgleich von einigen Herstellern Systeme zur Stabilitätskontrolle derartiger Fahrzeug bei Kurvenfahrten und/oder Fahrten mit angehobener Last angeboten werden und so die Kippsicherheit des Fahrzeuges wie eines Gabelstaplers erhöht wird, kann ein Umkippen aufgrund von Fahrbahnunebenheiten und Fahrfehlern nicht ausgeschlossen werden, so dass für den Fahrer Sicherungssysteme vorhanden sein müssen, die entweder von vornherein im System eingebaut sind oder nachgerüstet werden müssen.

Neben den zuvor erwähnten aktiven Systemen sind im Stand der Technik Fahrerschutzssysteme vorhanden, bei denen ein Unfallschutz mittels Gurt, eines Bügels oder spezieller Gestaltung der Kabine gewährleistet wird.

Die EP-A-0 992 382 zeigt ein gattungsgemäßes Fahrerschutzsystem.

Bei einer aus der DE-298 18 149 U1 bekannten Sicherheitseinrichtung erstreckt sich zwischen zwei benachbarten Säulen einer Fahrerkabine ein Rückhaltebügel, dessen ein Endabschnitt über ein Gelenk an einer Säule, beispielsweise der B-Säule einer Fahrerkabine befestigt ist. An der anderen Säule, beispielsweise der A-Säule, ist eine Verriegelung vorgesehen, über die der Haltebügel in seiner Schließposition festlegbar ist.

Nachteilig bei dieser Lösung ist, dass ein erheblicher fertigungstechnischer Aufwand erforderlich ist, um einerseits die Verriegelungseinrichtung und andererseits das Schwenkgelenk an den beiden Säulen zu befestigen.

Eine weitere Sicherheitseinrichtung ist in der DE-200 02 106 U1 beschrieben. Diese Sicherheitseinrichtung gemäß dem vorgenannten Gebrauchsmuster umfaßt ein an einer Säule befestigtes Schwenkgelenk, das einen in eine Öffnung der Fahrerkabine hineinragenden Haltearm trägt, wobei die Sicherheitseinrichtung dadurch gekennzeichnet ist, dass eine Verriegelung im Bereich des Schwenkgelenks angeordnet ist.

Die derartige Lösung soll dadurch einfacher als die oben beschriebene Rückhaltevorrichtung sein, dass durch das Zusammenfassen des Schwenkgelenks der Verriegelungseinrichtung nur ein einziger Montageschritt erforderlich ist.

Beiden oben beschriebenen Systemen ist jedoch gemeinsam, dass diese nur einen unzureichenden Schutz des Fahrers vor Verletzungen gewährleisten.

Ein weiteres Fahrerschutzsystem mit einer Haltebügelanordnung, deren eines Ende schwenkbar am Kabinenboden gelagert ist und deren anderes Ende an einer Aufnahmestange verriegelbar gehaltert ist, ist aus der US-A-4 392 660 bekannt.

Allen im Stand der Technik bekannten Systemen ist jedoch gemeinsam, dass sie einen oder mehrere Nachteile in folgender Beziehung haben:
- das System ist nicht ohne Zutun des Fahrers beim Fahren mit dem Fahrzeug ständig wirksam;
- die Fahrer werden beim Auf- und Absteigen am Fahrzeug oder beim Rückwärtsfahren behindert;
- das System ist nicht für alle Körpergrößen geeignet;
- das System ist nicht wartungsfrei und zuverlässig, sowie im Wege einer Wartung leicht prüfbar.

Die Aufgabe der Erfindung besteht daher darin, ein Fahrerschutzssystem bereitzustellen, bei dem möglichst alle der zuvor genannten Nachteile der im Stand der Technik bekannten Systeme beseitigt werden.

Die Lösung der Aufgabe der Erfindung erfolgt durch Bereitstellung eines Fahrerschutzsystems mit den Merkmalen des Hauptanspruches.

Die Erfindung betrifft daher ein Fahrerschutzsystem für Nutzfahrzeuge mit einem Fahrersitz, einem zumindest einseitig seitlich offenen Fahrerschutzdach mit vorderen und hinteren Holmen und mit einem ellipsoiden Bügelrahmen aus einem oberen Ellipsenbügel und einem unteren Ellipsenbügel, wobei die miteinander an ihren Enden verbundenen Bügel des ellipsoiden Bügelrahmens an dem einen Holm mit einem Scharnier angelenkt und an dem anderen Holm mittels eines Verriegelungssystems gehalten werden, und wobei das Scharnier an dem einen Holm oberhalb der Sitzlehne angebracht ist und das Verriegelungssystem am anderen Holm in Höhe der Sitzfläche des Sitzes angebracht ist.

Durch Ausführung des Fahrerschutzsystems in Form des ellipsoiden Bügelrahmens mit einem oberen Ellipsenbügel und einem unteren Ellipsenbügel, wird gewährleistet, dass der Arm-, Körper- und Beinbereich des Fahrers unabhängig von der Körpergröße des Fahrers seitlich geschützt ist. Hüft-, Knie- und Schulterpunkte sind für alle Fahrergrößen von der sogenannten kleinsten Frau bis größtem Mann durch die angepaßten Radien des ellipsoiden Bügels geschützt.

Das Fahrerschutzsystem ist für alle Arten von Nutzfahrezeuges wie Gabelstapler, Schlepper, sowie Bau- und Landmaschinen geeignet.

Zur Verringerung der Verletzungsgefahr ist der ellipsoide Bügelrahmen bevorzugt aus einem Rechteckprofil gefertigt.

In einer weiter bevorzugten Ausführungsform ist zur Erhöhung der Steifigkeit und zum erhöhten Schutz des Fahrers ein Haltebügel vorgesehen, der etwa in der Mitte des unteren Bügels des ellipsoiden Bügelrahmens ansetzt und über ein weiteres Scharnier am Holm unterhalb des ersten Scharniers, etwa in Höhe des Übergangsbereiches zwischen Lehne und Schemel des Fahrzeugsitzes angelenkt ist. Bei dieser Ausführungsform wird die Steifigkeit des Systems noch weiter erhöht und zusätzlich der Beckenbereich des Fahrers durch den Haltebügel geschützt. Des weiteren ist bei dieser Ausführungsform die Bewegungsfreiheit des Fahrzeugführers nicht eingeschränkt, da zwischen dem Haltebügel und den beiden Ellipsenbügeln ausreichend Ellenbogenfreiheit gegeben ist.

In einer weiter bevorzugten Ausführungsform ist der Haltebügel über den unteren Ellipsenbügel weiter verlängert, so dass er am oberen Ellipsenbügel festgelegt ist. Diese Ausführungsform ergibt eine erhöhte Verwindungssteifigkeit des ellipsoiden Bügels. Bei dieser Ausführungsform ist weiterhin von Vorteil, wenn zwischen dem unteren Ellipsenbügel und dem Haltebügel eine dreieckige Schutzplatte aus Blech vorgesehen ist, die beispielsweise mit einer Halterung für ein Hüftpolster versehen sein kann.

Die erfindungsgemäß verwendeten Scharniere und die Befestigungsvorrichtung werden vorzugsweise als Schraub- oder Klemmbefestigung ausgeführt, so dass sich die erfindungsgemäße Sicherungsvorrichtung leicht nachrüsten lässt.

In einer bevorzugten Ausführungsform sind Mittel vorhanden, die ein automatisches Schließen und/oder Zuhalten der erfindungsgemäßen Sicherungsvorrichtung bewirken. Diese können beispielsweise in Form einer Feder, einer schrägen Anbringung des oder der Scharniere oder von einer in die Scharniere eingebaute Rückstellfeder ausgeführt sein.

Weiterhin ist es vorteilhaft, dass das Verriegelungssystem einen Schnappriegel, einen Drehverschluß oder dergleichen aufweist.

Die Erfindung wird in der nachfolgenden Beschreibung anhand eines in der Zeichnung dargestellten Ausführungsbeispiels näher erläutert. Dabei zeigen
Figur 1 eine Seitenansicht eines Fahrerschutzdaches für einen Gabelstapler mit eingebautem Fahrerschutzsystem;
Figur 2 eine Seitenansicht eines Fahrerschutzdaches für einen Gabelstapler mit eingebautem Fahrerschutzsystem und einem Fahrer (5 Perzentil weiblich)
Figur 3 eine Seitenansicht eines Fahrerschutzdaches für einen Gabelstapler mit eingebautem Fahrerschutzsystem und einem Fahrer (95 Perzentil männlich).

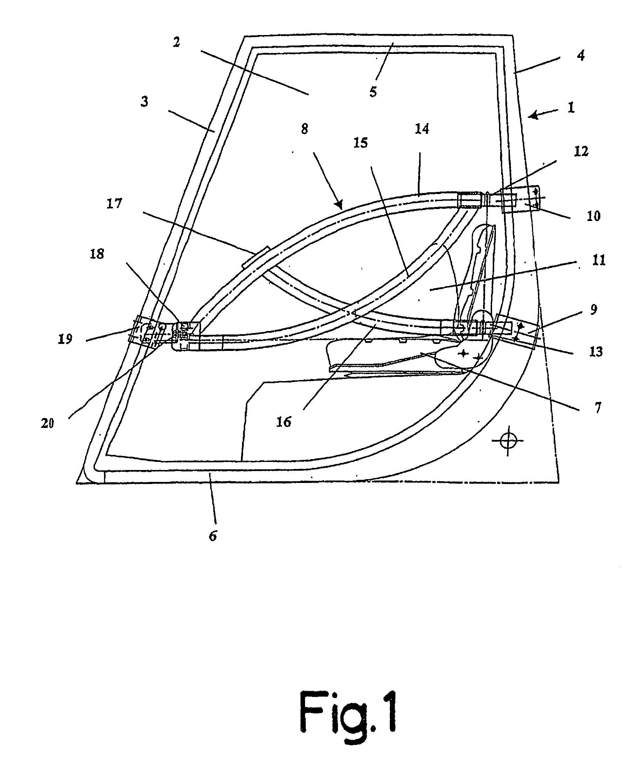

Wie in Figur 1 in der Seitenansicht des Fahrerschutzdaches 1 gezeigt, wird die seitliche Öffnung 2 auf der vorderen Seite der A-Säule 3 und auf der hinteren Seite von der B-Säule 4, nach oben durch den oberen Querholm 5 und nach unten durch den unteren Querholm 6 des Fahrerschutzdaches begrenzt. Der Fahrersitz 7 ist auf einem Sockel verschiebbar angeordnet, und das erfindungsgemäße Fahrerschutzsystem 8 unterteilt die seitliche Öffnung 2 des Fahrerschutzdaches.

Bei der in Figur 1 gezeigten Ausführungsform weist das erfindungsgemäße Fahrerschutzsystem 8 ein unteres Befestigungselement 9, ein oberes Befestigungselement 10 sowie eine zwischen dem unteren Ellipsenbügel 15 und dem Haltebügel 16 angeordnete Trägerplatte 11, beispielsweise für ein Hüftpolster, auf.

Am oberen Ende des Ellipsenbügelrahmens ist dieser über das Scharnier 12 mit dem oberen Befestigungselement 10 verbunden, während der Haltebügel, der in der in der Figur gezeigten Ausführungsform vorzugsweise vom B-Holm nach vorn erstreckend über den unteren Ellipsenbügel 15 zum oberen Ellipsenbügel 14 reicht und an diesen festgelegt ist. Bei dieser Ausführung wird die Steifigkeit und die Schutzwirkung des Schutzsystems weiter erhöht.

Bevorzugt weist der Haltebügel 16 im Übergangsbereich zum oberen Ellipsenbügel 14 ein Betätigungselement 17 mit Zugverbindung auf, um die im vorderen Bereich des Ellipsenbügelrahmens vorgesehene Verriegelungseinrichtung 18 mit Schließbolzen 20 zu betätigen. In einer besonders bevorzugten Ausführungsform ist das Betätigungselement 17 aus ergonomischen Gründen in den verlängerten Haltebügel integriert. Die Verriegelungseinrichtung 18 ist am vorderen A-Holm über die Halterung 19 festgelegt.

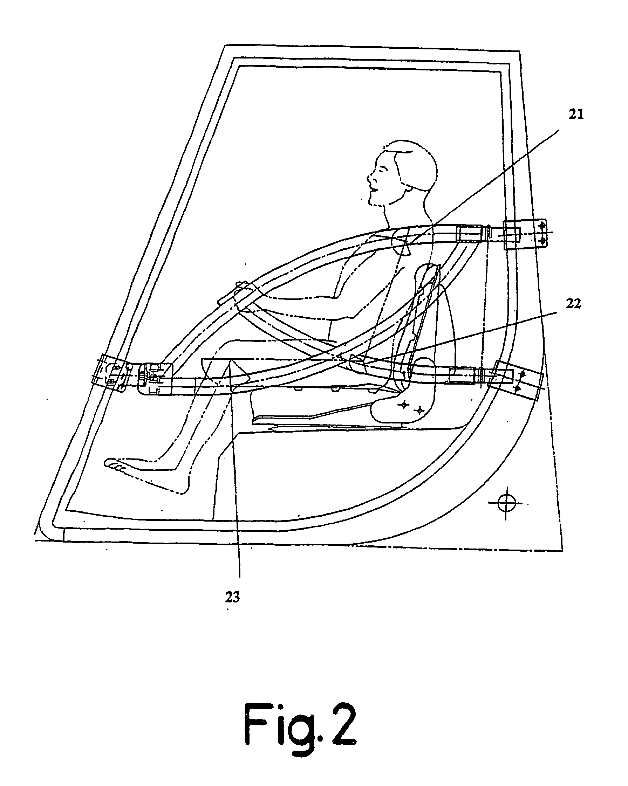

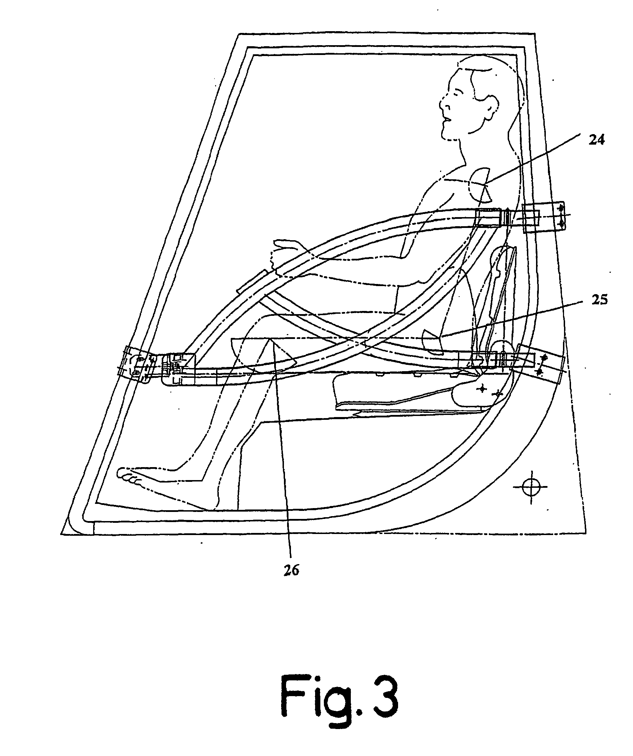

Die Figuren 2 und 3 zeigen eine Seitenansicht eines Fahrerschutzdaches bei verschiedenen Fahrergrößen, und die Lage der jeweiligen Schulterpunkte (21; 24), Hüftpunkte (22; 25) sowie Kniepunkte (23; 26) für einen kleinen Fahrer (Figur 2) bzw. einen großen Fahrer (Figur 3). Wie in diesen Figuren gezeigt, schützt das erfindungsgemäße Fahrerschutzsystem den Fahrer zuverlässig unabhängig von seiner Körpergröße.

## Patentansprüche

1. Fahrerschutzsystem für mobile Arbeitsmittel, insbesondere Nutzfahrzeuge, mit einem Fahrersitz, einem zumindest einseitig seitlich offenen Fahrerschutzdach (1) mit vorderen und hinteren Holmen (3;4) und mit einem Bügelrahmen (8) aus einem oberen Bügel (14) und einem unteren Bügel (15),
wobei die miteinander an ihren Enden verbundenen Bügel (14;15) des Bügelrahmens (8) an dem einen Holm (4) mit einem Scharnier (12) angelenkt sind und an dem anderen Holm (3) mittels eines Verriegelungssystems (18) gehalten werden, **dadurch gekennzeichnet, daß**
der Bügelrahmen (8) als ellipsoider Bügelrahmen aus einem oberen Ellipsenbügel (14) und einem unteren Ellipsenbügel (15) ausgebildet ist und daß das Scharnier (12) an dem einen Holm (4) oberhalb der Sitzlehne des Fahrersitzes (7) angebracht ist und das Verriegelungssystem (18) am anderen Holm (3) in Höhe der Sitzfläche des Fahrersitzes (7) angebracht ist.

2. Fahrerschutzsystem nach Anspruch 1, **dadurch gekennzeichnet, dass** zusätzlich ein Haltebügel (16) vorgesehen ist, der etwa in der Mitte des unteren Ellipsenbügels (15) des ellipsoiden Bügelrahmens (8) ansetzt und über ein weiteres Scharnier (13) am Holm (4) unterhalb des ersten Scharniers (12), etwa in Höhe des Übergangsbereiches zwischen Lehne und Schemel des Fahrersitzes (7) angelenkt ist.

3. Fahrerschutzsystem nach Anspruch 2, **dadurch gekennzeichnet, dass** zusätzlich zwischen dem unteren Ellipsenbügel (15) und dem Haltebügel (16) eine Schutzplatte (11) aus Blech vorgesehen ist, die beispielsweise mit einer Halterung für ein Hüftpolster versehen sein kann.

4. Fahrerschutzsystem nach Anspruch 2 oder 3, **dadurch gekennzeichnet, dass** der Haltebügel (16) über den unteren Ellipsenbügel (15) zum oberen Ellipsenbügel (14) verlängert ist und am oberen Ellipsenbügel (14) festgelegt ist.

5. Fahrerschutzsystem nach Anspruch 2 oder,3, **dadurch gekennzeichnet, dass** am oberen Ellipsenbügel (14) ein Betätigungselement (17) für das Verriegelungssystem (18), vorzugsweise im Übergangsbereich zwischen oberen Ellipsenbügel (14) und Haltebügel (16), vorgesehen ist.

6. Fahrerschutzsystem nach einem der vorhergehenden Ansprüche, **dadurch gekennzeichnet, dass** Haltebügel (16), unterer Ellipsenbügel (15) sowie oberer Ellipsenbügel (14) einen rechteckigen Querschnitt aufweisen.

7. Fahrzeug mit einem Fahrerschutzsystem nach einem der Ansprüche 1 bis 6.

## Claims

1. Driver-protection system for mobile equipment, in particular commercial vehicles, with a driver's seat, a driver-protection roof (1), which is open laterally at least on one side, comprising front and rear members (3; 4) and a bar-type frame (8) with a top bar (14) and a bottom bar (15),
wherein the bars (14; 15) of the bar-type frame (8), the bars being connected to one another at their ends, are articulated on one member (4) by means of a hinge (12) and are retained on the other member (3) by means of a locking system (18), **characterized in that**
the bar-type frame (8) is formed as an ellipsoidal bar-type frame with a top ellipse bar (14) and a bottom ellipse bar (15), and that the hinge (12) is fitted on one member (4), above the backrest of the vehicle seat (7), and the locking system (18) is fitted on the other member (3), level with the seat surface of the vehicle seat (7).

2. Driver-protection system according to Claim 1, **characterized by** further comprising a retaining bar (16) which starts approximately in the centre of the bottom ellipse bar (15) of the ellipsoidal bar-type frame (8) and is articulated on the member (4) via a further hinge (13), beneath the first hinge (12), approximately level with the transition region between the backrest and seat of the vehicle seat (7).

3. Driver-protection system according to Claim 2, **characterized by** further comprising, between the bottom ellipse bar (15) and the retaining bar (16), a protective panel (11) which is made of sheet metal and may be provided, for example, with a securing means for a hip pad.

4. Driver-protection system according to Claim 2 or 3, **characterized in that** the retaining bar (16) is extended beyond the bottom ellipse bar (15) to the top ellipse bar (14) and is secured on the top ellipse bar (14).

5. Driver-protection system according to Claim 2 or 3, **characterized in that** an actuating element (17) for the locking system (18) is provided on the top ellipse bar (14), preferably in the transition region between the top ellipse bar (14) and the retaining bar (16).

6. Driver-protection system according to anyone of the preceding claims, **characterized in that** the retaining bar (16), bottom ellipse bar (15) and top ellipse bar (14) have a rectangular cross section.

7. Vehicle with a driver-protection system according to anyone of Claims 1 to 6.

## Revendications

1. Système de protection du conducteur pour des engins de travail mobiles, notamment des véhicules utilitaires, comportant un siège du conducteur, un toit (1) de protection pour le conducteur, ouvert latéralement au moins d'un côté et possédant des montants avant et arrière (3; 4) et un cadre (8) formé d'arceaux comprenant un arceau supérieur (14) et un arceau inférieur (15),
dans lequel les arceaux (14; 15), reliés entre eux au niveau de leurs extrémités, du cadre (8) formé d'arceaux sont articulés sur l'un des montants (4) à l'aide d'une charnière (12) et sont retenus sur l'autre montant (3) à l'aide d'un système de verrouillage (18),
**caractérisé en ce que**
le cadre (8) formé d'arceaux est agencé sous la forme d'un cadre ellipsoïdal formé d'arceaux comprenant un arceau elliptique supérieur (14) et un arceau elliptique inférieur (15), et
que la charnière (12) est montée sur l'un des montants (4) au-dessus du dossier du siège (7) du conducteur et le système de verrouillage (18) est monté sur l'autre montant (3) à hauteur de la surface d'assise du siège (7) du conducteur.

2. Système de protection de conducteur selon la revendication 1, **caractérisé en ce qu'**il est en outre prévu un arceau de retenue (16), qui est monté approximativement au centre de l'arceau elliptique inférieur (15) du cadre ellipsoïdal (8) formé d'arceaux et est articulé au moyen d'une autre charnière (13) sur le montant (4) au-dessous de la première charnière (12), approximativement à hauteur de la zone de jonction entre le dossier et l'assise du siège (7) du conducteur.

3. Système de protection de conducteur selon la revendication 2, **caractérisé en ce qu'**il est prévu en supplément, entre l'arceau elliptique inférieur (14) et l'arceau de retenue (16) une plaque de protection (11) formée d'une tôle, qui peut être pourvue par exemple d'un dispositif de retenue pour un rembourrage au niveau de la hanche.

4. Système de protection de conducteur selon la revendication 2 ou 3, **caractérisé en ce que** l'arceau de retenue (16) est prolongé au-delà de l'arceau elliptique inférieur (15) en direction de l'arceau elliptique supérieur (14) et est fixé sur l'arceau elliptique supérieur (14).

5. Système de protection de conducteur selon la revendication 2 ou 3, **caractérisé en ce que** sur l'arceau elliptique supérieur (14) est prévu un élément d'actionnement (17) pour le système de verrouillage (18), de préférence dans la zone de jonction entre l'arceau elliptique supérieur (14) et l'arceau de retenue (16).

6. Système de protection de conducteur selon l'une des revendications précédentes, **caractérisé en ce que** l'arceau de retenue (16), l'arceau elliptique inférieur (15) et l'arceau elliptique supérieur (14) possèdent une section transversale rectangulaire.

7. Véhicule comportant un système de protection de conducteur selon l'une des revendications 1 à 6.
